(19) Europäisches Patentamt

European Patent Office

Office européen des brevets

(11) **EP 2 682 731 A2**

(12) **EUROPÄISCHE PATENTANMELDUNG**

(43) Veröffentlichungstag:
**08.01.2014 Patentblatt 2014/02**

(21) Anmeldenummer: 13174025.0

(22) Anmeldetag: **27.06.2013**

(51) Int Cl.:
*G01M 13/02* *(2006.01)*   *F16C 19/52* *(2006.01)*
*G01M 13/04* *(2006.01)*   *G01L 1/22* *(2006.01)*
*G01L 5/00* *(2006.01)*

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **03.07.2012   DE 102012211490**

(71) Anmelder: **Deutsches Zentrum für Luft- und
Raumfahrt e.V.
51147 Köln (DE)**

(72) Erfinder:
• **Saruhan-Brings, Bilge
53859 Niederkassel (DE)**
• **Dogduaslan, Muenevver, N.
34841 Istanbul (TR)**
• **Mondrágon Rodriguez, Guillermo Cesár
51147 Köln (DE)**
• **Brien, Jörg
53844 Troisdorf (DE)**

(74) Vertreter: **von Kreisler Selting Werner
Deichmannhaus am Dom
Bahnhofsvorplatz 1
50667 Köln (DE)**

(54) **Piezoresistive dotierte DLC-Sensorschichten**

(57)   Die vorliegende Erfindung bezieht sich auf eine Sensorschicht mit dotiertem Diamant-ähnlichem Kohlenstoff (DLC), sowie einen Kraftsensor, der eine entsprechende Sensorschicht umfasst. Eine erfindungsgemäße Schicht zeigt auch bei Temperaturen von über 125 °C ein stabiles Sensorverhalten.

**EP 2 682 731 A2**

**Beschreibung**

Die vorliegende Erfindung bezieht sich auf eine Sensorschicht mit dotiertem Diamant-ähnlichem Kohlenstoff (DLC), sowie einen Kraftsensor, der eine solche Sensorschicht umfasst.

Die Zustands- und Funktionsüberwachung beispielsweise von Aktuatoren und Wälzlagern ist für den wartungsfreien Betrieb dieser Bauteile relevant. Die Zustandsüberwachungssysteme werden in Bauteilen integriert, um die Auswirkungen einer einfachen Wirkungsgradreduktion bis hin zu irreversiblen Klemmfällen zu verhindern. Die Aufgabe solcher Sensorsysteme ist, die Fehler in einem möglichst frühen Stadium zu erkennen und die Restlebensdauer des Stellantriebs zu prognostizieren. Außerdem können Umbuchten, Lastverteilung, Rollen, Drehzahl und Drehrichtung einzelner Kugellagern bestimmt werden. Die entsprechenden Daten müssen möglichst unabhängig von äußeren Gegebenheiten am Ort der Entstehung gemessen werden können. Dabei soll ein dafür verwendeter Sensor die Eigenschaften des zu überwachenden Bauteils nicht beeinflussen.

Ein mögliches Sensordesign ist beispielsweise ein Dehnungsmessstreifen. Dehnungsmessstreifen sind Messeinrichtungen zur Erfassung von dehnenden Verformungen, insbesondere an der Oberfläche von Bauteilen. Sie ermöglichen die experimentelle  Bestimmung von mechanischen Spannungen und damit die Beanspruchung des Werkstoffs. Dies ist sowohl in den Fällen wichtig, in denen diese Beanspruchung rechnerisch nicht hinreichend genau bestimmt werden kann, als auch zur Kontrolle von berechneten Beanspruchungen. Als Sensormaterial von Dehnungsmessstreifen haben sich piezoelektrische Materialien durchgesetzt. Solche piezoelektrische Sensoren arbeiten mit dem piezoelektrischen Effekt. Die Piezoelektrizität beschreibt die Änderungen der elektrischen Polarisation und somit das Auftreten einer elektrischen Spannung an Festkörpern, wenn sie elastisch verformt werden.

Kenngröße eines Kraftsensors ist der Gauge Faktor. Bei einem Dehnungsmessstreifen ergibt sich der Gauge Faktor aus dem Verhältnis zwischen der relativen Dehnung oder Stauchung und der sich daraus ergebenden relativen Widerstandsänderung. Seine Größe wird bestimmt durch die Formänderung des Sensormaterials sowie die Änderung des spezifischen Widerstands des Sensormaterials.

Konventionelle Kraft- bzw. Dehnungssensoren werden häufig in Form von Dehnungsmessstreifen mittels eines Klebers auf die Oberfläche eines zu überwachenden Bauteils aufgebracht. Diese Vorgehensweise kann durch Ablösung bzw. Schwellung des Klebers zu inkorrekten Messungen führen. Dieses Problem kann durch direkte Abscheidung von piezoresistiven bzw. piezoelektrischen Sensorschichten an der Materialoberfläche des Bauteils vermieden werden.

Bekannte Sensorschichten ermitteln die Daten beispielsweise über piezoresistive Eigenschaften. Hier haben sich Sensorschichten, welche Diamant-ähnlichen Kohlenstoff (DLC) umfassen, in den letzten Jahren hervorgetan. Neben piezoresistiven Eigenschaften weisen  entsprechende Sensorschichten auch eine hohe Reibungsbeständigkeit auf. Wegen deren hervorragenden mechanischen Eigenschaften, Korrosionsbeständigkeit und Biokompatibilität finden die DLC-Schichten häufig für tribologische, optische und biologische Zwecke Verwendung.

Für die Erhaltung einer hohen Sensitivität bei piezoresistiven Sensoren spielt der Basiswiderstandswert des Sensormaterials eine wichtige Rolle. Je höher der anfängliche Widerstand des Sensormaterials ist, desto höher sind die Kraftmesskapazität und die Sensitivität des Sensors. So kann eine höhere Widerstandsänderung unter erhöhter Kraft gemessen werden.

Diamant-ähnlicher Kohlenstoff (Diamond Like Carbon, DLC) bezeichnet dünne Kohlenstoffhartschichten mit amorpher Natur. Sie bestehen aus einer isolierenden $sp^3$_Matrix (Diamantstruktur) und leitenden $sp^2$_ Clustern (Graphit). In der Literatur werden mehrere Verfahren zur Herstellung entsprechender Schichten beschrieben, wie beispielsweise Magnetron-Sputtern, Plasma-unterstützte chemische Dampfphasenabscheidung (PACVD), gepulste Laserabscheidung (PLD), massenselektierte Ionenstrahl und kathodische Vakuum-Lichtbogenabscheidung (Peiner, E. et al.; J. Micromech. Microeng. 17 (2007) S. 83-90). Je nach Herstellungsverfahren kann DLC Wasserstoffatome von 0 bis 50 % beinhalten (Luo, J.K. et al. J. Micromech. Microeng. 17 (2007) S. 147-163).

Bei der Untersuchung der piezoresistiven Eigenschaften von DLC-Schichten bei geringen Temperaturen sind Gauge Faktoren über 60 gemessen worden (DE 199 54 164 A1, Peiner, E., loc. cit.). Der Gauge Faktor (GF) wird auch als k-Faktor oder Proportionalitätsfaktor  bezeichnet. Er ist ein Maß für die Empfindlichkeit eines Kraft-, Druck oder Dehnungssensors.

Neben dem Gauge Faktor ist auch der Widerstandswert eines Sensors relevant. Hydrogenierte DLC-Schichten (a-C: H) weisen höhere Widerstandswerte zwischen $10^6$-$10^{12}$ Ωcm auf, im Vergleich zu nichthydrogenierten DLC (a-C) ($10^{-1}$ Ωcm) (Peiner, E., loc. cit.). Diese Entdeckung führt dazu, dass DLC-Schichten in den letzten Jahren vermehrt als verschleiß- und korrosionsbeständige Smart-Sensorschichten eingesetzt wurden (Tibrewela, A., et al. 2006, J. Micromech. Microeng., 2006, 16, S 75-81; Koppert, R., Goettel D., Freitag-Weber, O., Schultes, G., Solid State Sciences, 2009, 11, 1797-1800).

DLC-Schichten haben neben hohen Gauge Faktoren (GF) auch einen sehr hohen negativen Temperaturkoeffizienten des elektrischen Widerstands (TCR) (Takeno, T., et al. Int. J. Appl. Electromagnetics and Mechanics, 2008, 28, 211-217). Das bedeutet eine hohe Temperatursensitivität der Sensorschicht, da es zwischen dem GF und dem TCR ein sogenanntes "Trade-off"-Verhältnis gibt. Ein idealer Dehnungssensor soll einen möglichst hohen GF und einen sehr niedrigen TCR von idealerweise Null haben. Während der Messung muss im Fall eines hohen negativen bzw. positiven TCR eine hohe Temperaturdrift verkraftet werden. Dieses Problem kann durch die Verwendung des nahezu-null-TCR Konzeptes gelöst werden. Bei diesem Konzept soll durch die Zugabe von Metall-Atomen mit TCR>0 zu DLC-Schichten mit negativem TCR (TCR<0) eine thermale Kompensation des Widerstandes erreicht werden.

DLC-Schichten wurden mit Ag, Ti, W und Ni dotiert und für ihre TCR und GF untersucht (Petersen, M., Heckmann, U., Bandorf, R., Gwozdz, V., Schnaubel, S., Bräuer, G., Klages, C.-P., Diamond & Related Materials, 2011, 20, S. 814-818). Bei Ag-, Ti- und W-DLC-Schichten wurde ein durchschnittlicher GF von 2 erreicht. Der TCR von diesen Me-DLC-Schichten war im Durchschnitt 500 ppm/K. Bei diesen Me-DLC wurde daher kein Null-TCR-Übergang beobachtet.

Allerdings wird die elektrische Leitfähigkeit von amorphen KohlenstoffSchichten durch die Zugabe von Metall-Atomen (z.B. Au und Ta) etwa um den Faktor 12 beeinflusst. So verändern sie sich von einem Isolator allmählich zu einem Leiter. Die Änderung der elektrischen Leitfähigkeit ist vom Grad der Verteilung und von der Form und Menge der verteilten Metallclustern abhängig. Zwar wird durch die Zugabe von Metall-Atomen der Temperaturkoeffizient des elektrischen Widerstandes (TCR) von DLC nahezu auf null gebracht und somit Widerstandsänderungen kompensiert, die hohen Widerstandeswerte von amorphen (a-C: H) DLC-Schichten ($>10^{12}$ $\Omega$cm) werden aber bis auf $10^4$ $\Omega$cm erniedrigt (US 7,7073,390 B2). Hierdurch werden die hohen GF-Werte reduziert bzw. gute Last-Sensitivitäten der Me-DLC-Sensorschichten bei erhöhter Belastung vermindert.

Bei Cr-DLC-Schichten wurde dieses Phänomen deutlich beobachtet. Bei einem Cr-Gehalt von 19,5% in DLC wurde ein TCR von 300 ppm/K gemessen. In diesem Fall war der GF leicht unter 2 und somit geringer als der GF von reinen metallischen Cr-Piezoresistoren. Diese hydrogenierten Cr-DLC-Schichten wurden durch das reaktive RF-Sputtern von metallischen Cr-Targets unter der Zuführung von Acetylen/Argon-Glasfluss abgeschieden. Diese Cr-DLC-Schichten weisen neben Cr und Kohlenstoff, auch 15 bis 26% Sauerstoff in Abhängigkeit der Acetylen/Ar-Gasverhältnis ($C_2H_2$/Ar= 4 bis 1) auf. Bei niedrigeren $C_2H_2$/Ar-Verhältnissen (Cr/C=0.5-0.2) lag Chrom teilweise oxidiert vor; bei höheren $C_2H_2$/Ar-Flüssen (Cr/C= 0.07-0.04) dagegen war freier Sauerstoff präsent und mit Chrom nicht gebunden (Gudaitis, R., Meskinis, S., Slapikas, K., Andrulevicius, M., Niaura, G., Tamulevicius, S., Surface & Coatings Technology, 2011, Artikel in press, online unter http://dx.doi.org/10.1016/j.surfcoat.2011.08.040).

Die erfolgreichste Verwendung des nahezu-null-TCR Konzepts wurde bisher mit Ni-DLC-Schichten erreicht. Im Fall dieser Schichten wurde einen Durchgang des nahezu null TCRs ($\pm$ 50 ppm/K) bei einem GF von 12 berichtet (Koppert, R., loc. cit.). Dies gelingt in einem Temperaturbereich von etwa 90K bis 400K (bis etwa 127°C) durch Verwendung niedrigeren Bias-Spannungen und nur bei einem Ni-Gehalt von 50 at% im DLC. Bei Ni-Gehalten von weniger als 50 at% wurden negative TCR-Werte erhalten, während bei Ni-Gehalten von mehr als 50 at% die TCR-Werte positiv waren und dem TCR-Wert von reinem Nickel entsprechen (+ 6700 ppm/K) (Heckmann, U., Bandorf, R., Gerdes, H., Lübke, M., Schnaubel, S., Bräuer, G., Procedia Chemistry, 2009, 1, S. 64-67). Bei über 75 at% Ni in DLC wurde der Gauge Faktor, hauptsächlich durch die Kontakte zwischen den metallischen Partikeln, auf 2 reduziert. Nach dem Vakuum-Glühen der Ni-DLC-Schichten bei 400°C wurde eine Phasenumwandlung des Nickels von Hexagonal bzw. Rhomboedrisch zu kubisch (fcc) beobachtet. Die Wärmebehandlung der Ni-DLC-Schichten an Luft dagegen resultiert in der Oxidation vom Nickel und einer extremen Erhöhung des Widerstandes, so dass keine sensorische Messung mehr möglich ist (Koppert R, loc. cit).

Für W-DLC-Schichten sind die Ergebnisse kontrovers. Die niedrigste positive TCR einer W-DLC-Schicht beträgt $2X10^3$ ppm/K, wobei dessen Gauge Faktor einen negativen Wert hat (GF=- 6.0) (Takeno, T., Miki Hiroyuki, Takagi ,T., Int. J. Appl. Electromagnetics and Mechanics, 2008, 28, 211-217).

Die der vorliegenden Erfindung zugrundeliegende Aufgabe ist die Bereitstellung einer Sensorschicht, die als dünne Schicht auf Bauteile direkt aufgebracht werden kann. Eine solche Sensorschicht soll Bestandteil eines Kraftsensors sein, der zur Zustands- und Funktionsüberwachung von Bauteilen eingesetzt wird. Bevorzugt soll es sich um einen Dehnungssensor handeln. Eine erfindungsgemäße Sensorschicht sollte bei Temperaturen auch oberhalb von 100 °C Messdaten mit höherer Sensitivität liefern, als dies im Stand der Technik beschrieben ist.

Die im Stand der Technik beschriebenen DLC-Schichten wurden aus gasphasigen Ausgangsmaterialien hergestellt und sind a-C:H Formen von DLC. Die mit metallischen Teilchen dotierten DLC Schichten (Me-DLC) weisen einen deutlich reduzierten Widerstandswert auf. Me-DLC-Sensorschichten mit einem niedrigen TCR und gleichzeitig hohem Gauge Faktor konnten jedoch nur mit Nickel in einem sehr engen Bereich der Zusammensetzung realisiert werden. Der Einsatz von entsprechenden Dehnungssensoren ist auf einen Temperaturbereich von etwa bis zu 125 °C beschränkt.

Im Gegensatz hierzu weist eine erfindungsgemäße DLC-Sensorschicht einen nahezu Null TCR (- 0.00317 ppm/°C) bei gleichzeitig hohem Widerstandswert auf. Die erfindungsgemäßen Sensoren können auch bei Temperaturen von über 125 °C eingesetzt werden.

Die erfindungsgemäße Sensorschicht ermittelt die Daten über piezoresistive Eigenschaften. Für die Erhaltung einer hohen Sensitivität bei piezoresistiven Sensoren spielt der Basiswiderstandswert eine wichtige Rolle. Je höher der anfängliche Widerstand des Materials ist, desto höher sind die Kraftmesskapazität und die Sensitivität des Sensors. So kann eine höhere Widerstandsänderung unter erhöhter Belastung gemessen werden.

Um die piezoresistiven Eigenschaften einer Schicht zu bestimmen, eignet sich beispielsweise die elektrische 4-Punkt-Methode. Hierbei handelt es sich um ein Verfahren, um den Flächenwiderstand, also den elektrischen Widerstand einer Oberflächen oder dünnen Schicht, zu ermitteln. Bei der Methode werden vier äquidistant in einer Reihe angeordnete Elektroden auf die Probe aufgesetzt. Durch die äußeren Spitzen wird Strom ein- und ausgespeist, während das innere Elektrodenpaar die Potentialdifferenz auf der Probenoberfläche abtastet. Die Potentialdifferenz wird durch eine Kompensationsschaltung stromlos gemessen.

In einer ersten Ausführung umfasst die vorliegende Erfindung eine Sensorschicht für einen Kraftsensor mit Diamant-ähnlichem Kohlenstoff (DLC) welche mit wenigstens einer Metall-Stickstoff-Verbindung dotiert ist (MeN-DLC). Erfindungsgemäß kann die Sensorschicht auch mit mehreren unterschiedlichen Metall-Stickstoff-Verbindungen dotiert sein. Bevorzugt ist sie mit einer Metall-Stickstoff-Verbindung dotiert.

Durch die Dotierung des DLC mit insbesondere piezoresistiven Metall-Stickstoff-Verbindungen werden die Nachteile aus dem Stand der Technik vermieden. Im Gegensatz zur Dotierung von DLC mit metallischen Teilchen ist bei der erfindungsgemäßen Sensorschicht praktisch kein Verlust des Widerstandswertes zu beobachten.

Die Werte für TCR und Widerstand von mit Metallen und Nicht-Metallen zur Dotierung von DLC-Schichten sind in der folgenden Tabelle 1 dargestellt.

Tabelle 1:

| Reine Metalle | TCR (ppm/K) | Widerstand ($\Omega$cm) | | Nichtmetalle | TCR (ppm/K) | Widerstand ($\Omega$cm) |
|---|---|---|---|---|---|---|
| Ag | + 3800 | $1{,}59 \times 10^{-8}$ | | Kohlenstoff | 5000 | $5\text{-}8 \times 10^{-4}$ |
| Al | + 4000 | $2{,}82 \times 10^{-8}$ | | Graphit | - 2000 | $2{,}5 \times 10^{-6}$ |
| Au | + 3980 | $2{,}44 \times 10^{-8}$ | | AlN | - 469 bis +109 | $1 \times 10^{-3}$ bis $5 \times 10^{2}$ |
| Cu | + 3980 | $1{,}68 \times 10^{-8}$ | | TaN | - 80 | 0,25 |
| Fe | + 6570 | $1{,}0 \times 10^{-8}$ | | TiN | + 624 | 1,4 |
| Ni | + 6700 | $6{,}99 \times 10^{-8}$ | | TiON | + 1400 | 0,06 |
| Pt | + 3880 | $1{,}06 \times 10^{-8}$ | | ZrN | + 146 | 1,09 |
| Ti | + 1360 | $4{,}20 \times 10^{-8}$ | | ZrON | + 695 | 0,695 |
| W | + 4800 | $5{,}6 \times 10^{-8}$ | | Zr | + 1090 | 0,14 |

Bei der Metall-Stickstoff-Verbindung gemäß der vorliegenden Erfindung handelt es sich vorzugsweise um Metallnitride und/oder Metalloxinitride. Als Nitride bezeichnet man chemische Verbindungen von Stickstoff mit einem weiteren Element. Nitride im Sinne der vorliegenden Erfindung umfassen alle Arten von Nitriden, also kovalente Nitride, metallische Nitride sowie ionische Nitride. Gleiches gilt auch für Oxinitride.

Durch die Dotierung der DLC-Schicht mit Metall-Stickstoff-Verbindungen werden die piezoresistiven Eigenschaften der Sensorschicht nicht beeinflusst. Bei Metall-Stickstoff-Verbindungen handelt es sich bevorzugt um solche Verbindungen, die selbst piezoresistive Eigenschaften aufweisen.

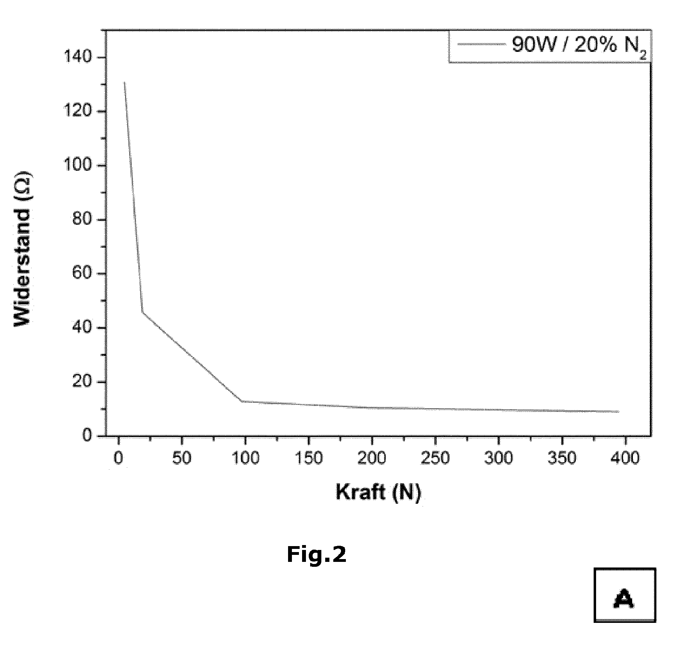

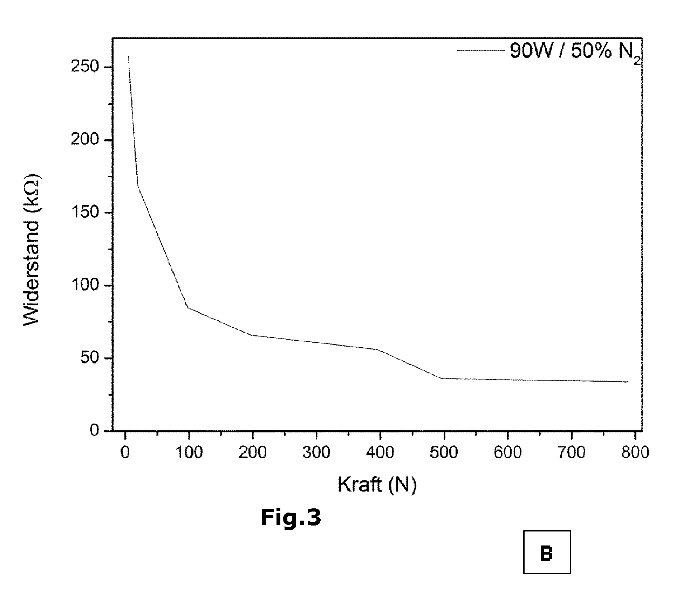

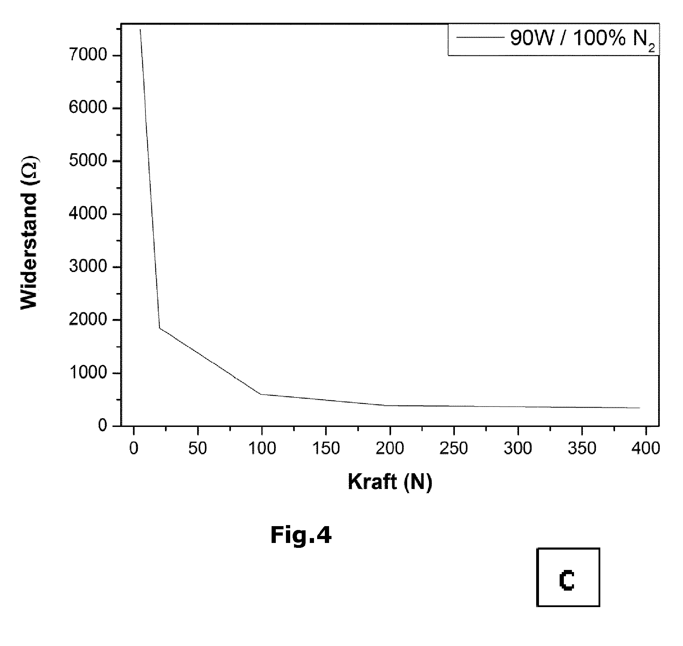

Metall-Stickstoff-Verbindungen im Sinne der vorliegenden Erfindung umfassen auch solche Verbindungen, in welchen die Metall-Stickstoff-Verbindung nicht vollständig als Nitrid vorliegt. Dabei ist es bevorzugt, dass die Metall-Stickstoff-Verbindung im DLC einen Überschuss an Stickstoff aufweist. Überraschenderweise hat sich gezeigt, dass der Stickstoff-Gehalt in einer erfindungsgemäßen Sensorschicht eine wesentliche Rolle bei dem Basiswiderstandsniveau spielt. Durch einen Überschuss an Stickstoff weist ein erfindungsgemäßer Sensor einen höheren Widerstandswert auf. Fig. 2, 3 und 4 zeigen die Widerstandswerte von Sensoren mit einem erhöhten Basiswiderstand. Der Anteil an Stickstoff ist in Tabelle 2 dargestellt.

Das Metall der Metall-Stickstoff-Verbindung ist bevorzugt ausgewählt aus Al, Ga, Ti, Ta, Zr, In, B und Zn, besonders bevorzugt aus Al, Ga und Ta. Werden diese Metalle in Form ihrer Metall-Stickstoff-Verbindung in die Diamantähnliche Kohlenstoffschicht des erfindungsgemäßen Sensors eingebaut, so erhält man eine Sensorschicht mit hohem Widerstandswert und einen Gauge Faktor deutlich höher als 2 und einen TCR-Wert im Bereich von 0. Beispielweise wird als Metall Al gewählt. Dieses ist weiter bevorzugt, da mit dessen nitridischer Bindung ein höher-resistives Sensorverhalten als mit Ta, Ti und Cr erreicht wird.

Durch reaktiv-Sputtern von AlN mit einem Al-Target unter Zugabe von unterschiedlichen Mengen an Stickstoff in DLC-Schichten wurden verschiedene piezoresistive Materialien hergestellt. In der nachfolgenden Tabelle 2 sind die Herstellungsparameter sowie die Eigenschaften der erfindungsgemäßen Schichten dargestellt.

EP 2 682 731 A2

Tabelle 2:

| Probe Bezeichnung | Spannung an Al-Target (W) | N$_2$ Konzen. in Argon (Vol%) | Schichtdicke ($\mu$m) | Widerstand (k$\Omega$) |
|---|---|---|---|---|
| a-C | 0 | 0 | 0,539 | 0,26 |
| A (a-C/Al+N) | 90 | 20 | 1,44 | 0,13 |
| B (a-C/Al+N) | 90 | 50 | 2,1 | 257,8 |
| C (a-C/Al+N) | 90 | 100 | 2,16 | 17,5 |

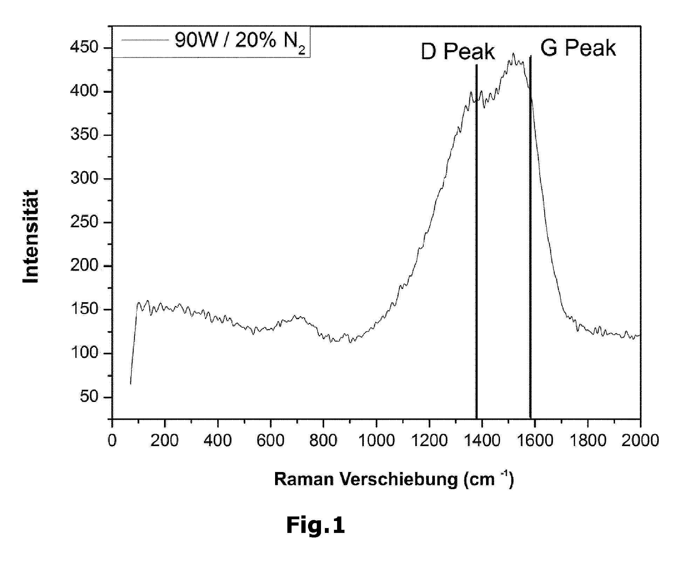

Durch Raman-Analyse kann die DLC-Ordnung nachgewiesen werden. Fig. 1 zeigt ein Raman-Spektrum der Probe A. Die DLC Ordnung wird durch die Präsenz von typischen G und D Peaks an den bekannten Raman-Verschiebungspositionen von 1580 cm$^{-1}$ und 1380 cm$^{-1}$ im Spektrum bestimmt. Der kleine und breite Peak zwischen 600 cm$^{-1}$ und 800 cm$^{-1}$ kann amorphem AlN zugeordnet werden.

Alle drei Proben A, B und C weisen Sticksoff auf, was mit Hilfe von EDX (engl.: energy dispersive X-ray spectroscopy; de: Energiedispersive Röntgenspektroskopie) nachgewiesen werden kann. Die Röntgenanalyse der drei Proben zeigt, dass die Schichten A, B und C nach der Beschichtung amorph vorliegen.

Undotierte, nichthydrogenierte amorphe Kohlenstoffschichten (a-C:DLC) weisen Widerstandswerte im Bereich von 250 $\Omega$ auf. Der Einfluss des Stickstoff-Gehalts auf die piezoresistiven Eigenschaften von a-C:DLC Schichten wird aus Fig. 2 bis 4 ersichtlich. Diese zeigen Kraft-Widerstandsmessungen für die Proben A (Fig. 2), B (Fig. 3) und C (Fig. 4). Die Angaben für Stickstoff entsprechen dem Anteil an Stickstoff bezogen auf Argon bei der Herstellung der Proben.

Unter Verwendung von gleichen Spannungswerten auf dem Al-Target war der Widerstand von dotiertem DLC 130 $\Omega$ mit 20% N$_2$ (Probe A) 257 k$\Omega$ mit 50% N$_2$ (Probe B) und 17 k$\Omega$ mit 100% N$_2$ (Probe C). Diese Widerstandswerte reflektieren den Zustand mit einer Vorlast von 5N auf der Sensorschicht. Der Widerstandswert bei der Null-Last ist höher und liegt teilweise im M$\Omega$ Bereich, wie aus den Fig. 2 bis 4 ersichtlich ist.

Das optimale Sensorverhalten beruht somit auf der Anwesenheit von AlN als Dotierungsmaterial der DLC-Schicht. Es wird jedoch von der Menge an ungebunden vorliegenden Stickstoff beeinflusst.

Ein ähnliches hoch-resistives Sensorverhalten erhält man außer mit einer AlN-Dotierung auch mit den Dotierungen mit den weiteren erfindungsgemäßen Metall-Stickstoff-Verbindungen.

Die Metall-Stickstoff-Verbindung liegt im Diamant-ähnlichen Kohlenstoff homogen verteilt ohne Clusterbildung, bevorzugt in Form von Partikeln vor. Insbesondere handelt es sich hier um Nanopartikel. Diese weisen vorzugsweise eine Nanometer-Größe im Bereich von kleiner als 100 nm auf. Die Größe der Nanopartikel kann beispielsweise im Transmissionen-Elektronen-Mikroskop (TEM) bestimmt werden.

In den amorphen Schichten können auch in den Metall-Stickstoff-Verbindungsreihen homogen verteilte kleine Domänen auftreten

Um eine ausreichende Sensorwirkung der erfindungsgemäßen Sensorschicht sicherzustellen, kann die Menge an Metall-Stickstoff-Verbindung des Diamant-ähnlichen Kohlenstoffs 5 bis 50 Gew.-% bezogen auf 100 Gew.-% DLC betragen. Weist die Diamant-ähnliche Kohlenstoffschicht einen höheren oder einen geringeren Anteil an der Metall-Stickstoff-Verbindung auf, wird der Basis-Widerstand reduziert und die Sensor-Empfindlichkeit vermindert.

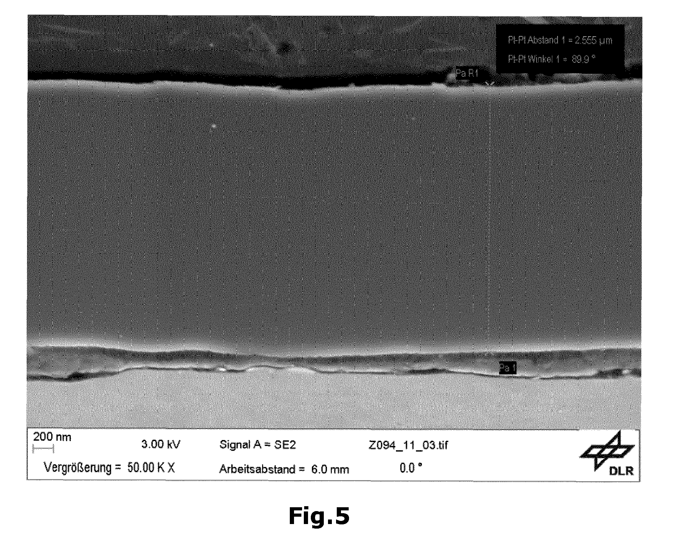

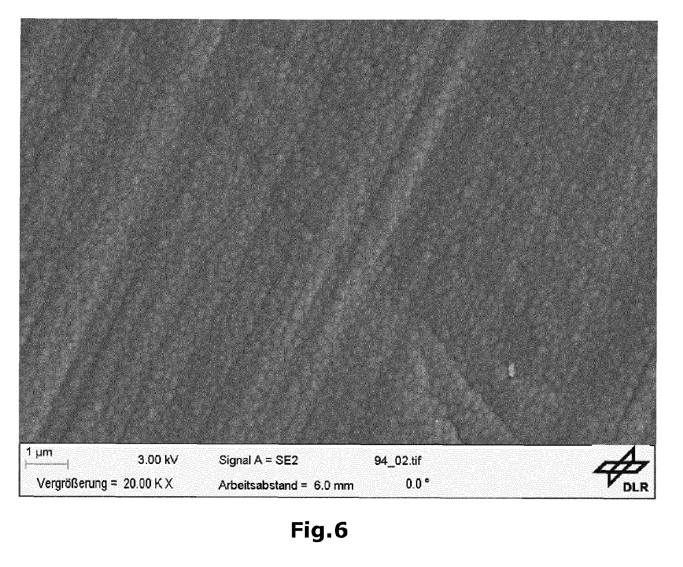

Erfindungsgemäß weist die Sensorschicht vorzugsweise eine Dicke im Bereich von 300 nm bis 3 $\mu$m auf. Eine dünnere Sensorschicht kann keine ausreichende Stabilität auf dem zu überwachenden Bauteil gewährleisten. Ist die Sensorschicht zu dick, kann sie die Funktionsweise des zu überwachenden Bauteils/Werkzeugs beeinflussen. Die Schichtdicke kann nach im Stand der Technik bekannten Verfahren bestimmt werden. Bei geometrischen Methoden wird durch Bestimmung der Gewichtszunahme das Volumen und damit die Dicke der Schicht bestimmt. Weiterhin sind destruktive Methoden bekannt, bei denen die Schichtdicke durch Glimmentladung gemessen wird. Durch die Entladung entsteht eine Delle bis zum Substrat, deren Tiefe der Schichtdicke entspricht. Alternativ kann ein Querschliff des erfindungsgemäßen Sensors mit Hilfe eines Rasterelektronenmikroskops (REM) untersucht werden. Fig. 5 und 6 zeigen entsprechende REM Aufnahmen. Fig. 5 ist eine REM-Aufnahme einer AlN-dotierten DLC-Schicht im Querschliff. Fig. 6 ist eine REM-Aufnahme der Draufsicht auf einen AlN dotierten DLC-Sensor.

In einer weiteren Ausführungsform wird die der vorliegenden Erfindung zugrundeliegende Aufgabe gelöst durch ein Verfahren zur Herstellung einer zuvor beschriebenen Sensorschicht. Das erfindungsgemäße Verfahren ist dadurch gekennzeichnet, dass die Metall-Stickstoff-Verbindung zusammen mit dem Diamant-ähnlichen Kohlenstoff mittels Reaktiv-Sputtern auf das zu überwachende Bauteil aufbringt. Das Aufbringen mittels DC-Reaktivsputtern, Plasma-unterstützter CVD, RF pulsiertem Gasfluss-Sputtern oder Magnetron-Sputtern erfolgt bevorzugt mit einer Beschichtungsrate von 0,4 bis 2 $\mu$m/min. Bei dieser erhält man eine homogene Schicht. Gleichzeitig erreicht man so eine effiziente Produktion, da die Beschichtungszeit nur wenige Sekunden dauert, so dass eine hohe Stückzahl am Tag hergestellt werden kann. Durch die kurze Beschichtungszeit sinkt auch der Energieverbrauch, wodurch eine effektive und kostengünstige Produktion gewährleistet ist.

Durch die Einstellung der Parameter zur Herstellung der Nitride, wie beispielsweise Menge an zugegebenem Stickstoff und am Metall-Target angelegte Spannung, kann der TCR von MeN-DLC-Schichten eingestellt werden. Die oxidationsbedingte Erhöhung des Widerstands wird im Fall der erfindungsgemäßen MeN-DLC-Schichten vermieden, da die Effekte, die durch die MeN-Dotierung gezielt verursacht werden, auch durch die MeON-Dotierung erreicht werden.

Als Quelle für das Metall wird üblicherweise ein entsprechendes Metall-Target verwendet. Die Menge an abgeschiedenem Metall wird über die an das Target angelegte Spannung reguliert. Der Stickstoff für die Metall-Stickstoff-Dotierung wird als Gas in die Beschichtungskammer zugeführt. Die Menge an zugeführtem Stickstoff beeinflusst die Eigenschaften der Sensorschicht, wie in Fig. 2 bis 4 gezeigt.

Die DLC-Schicht kann nach aus dem Stand der Technik grundsätzlich bekannten Verfahren hergestellt werden. Als Quelle für den Kohlenstoff kann entweder ein festes Target oder eine Gas, wie beispielsweise Methan oder Acetylen, dienen. Diese Quellen ermöglichen die Herstellung hydrogenierter DLC-Schichten (a-C:H), welche Widerstandswerte zwischen 106 und 1012 $\Omega$ aufweisen und somit zur Sensitivität des Sensors beitragen.

Bevorzugt beträgt der Anteil an Stickstoff weniger als 28 Vol.-% bezogen auf Argon. Die am Target angelegte Spannung liegt bevorzugt im Bereich von 90 W bis 2 kW. Der Abstand zwischen dem Target und dem zu beschichtendem Substrat beträgt bevorzugt 100 mm bis 150 mm.

In einer weiteren Ausführungsform betrifft die vorliegenden Erfindung einen Kraftsensor mit einer erfindungsgemäßen Sensorschicht sowie ein Verfahren zur Herstellung desselben. Ein entsprechender Kraftsensor kann dadurch hergestellt werden, dass man die erfindungsgemäße Sensorschicht über eine Haftvermittlerschicht mit dem zu überwachenden Bauteil koppelt. Dabei besteht die Haftvermittlerschicht bevorzugt aus TiC, oder anderen Metall-Karbiden.

Ein erfindungsgemäßer Kraftsensor eignet sich beispielsweise zur Zustands- und Funktionsüberwachung von Getrieben, Windturbinen, Hubschraubern, Flugsystemen, rotierenden Bauteilen, Druckmaschinen und in der Werkzeugfertigung.

Ausführungsbeispiele:

1. AlN-dotiertes a-C DLC:

Die Beschichtungen wurden von festen Kohlenstoff- und Aluminium-Targets durch Zugabe vom Stickstoff in Argon durchgeführt. Die DC-Leistung bei Verwendung eines 100mm (4") Durchmesser-Targets betrug für Kohlenstoff 650W. Bei dem gleich großen Aluminium-Target wurde die DC-Leistung von 30 bis 1000W variiert unter konstant gehaltener Stickstoff-Konzentration in Argon ($N_2$: 20-100%) zu Einstellung der AlN-Dotierungskonzentration. Daher konnte die Bias-Spannung in einem Bereich von 50-500V eingestellt werden. Während der Beschichtung wurde der Kammerdruck bei $5 \times 10^{-3}$ mbar (0,5 Pa) gehalten. Die Substrate wurden mit einer Geschwindigkeit von 12 U/min rotiert und befanden sich in einem Abstand von 120 mm von beiden Targets.

2. AlN dotiertes a-C:H DLC:

In diesem Fall wurde ein festes Target nur für das Reaktivsputtern von Aluminium mit Stickstoff in Argon verwendet. Die DC-Leistung auf dem Al-Target betrug 30-1000W. Eine gepulste DC Bias-Spannung im Bereich von 600V wurde unter Verwendung von 150 kHz Frequenz und einem Duty cycle von $2\mu$s eingesetzt. Die DLC-Beschichtung wurde über Gasquellen (z.B. Methan, Acetylen, usw.) durchgeführt. Hierbei spielte der Kammerdruck eine Rolle bei der Einstellung der Zusammensetzung von DLC und AlN-Dotierung. Daher wurde der Kammerdruck zwischen $5 \times 10^{-3}$ - $5 \times 10^{-2}$ mbar (0,5-5 Pa) variiert, in der Abhängigkeit von Methan/Argon+Stickstoff -Verhältnis (z.B.: 1:5) für DLC und in der Stickstoff-Konzentration in Argon (10-100% $N_2$) für AlN. Für die Einstellung wurde das relative Verhältnis, *R* verwendet:

$$R = \frac{C_{N_2}}{C_{N_2} + C_{Ar}}$$

Wobei $C_{N_2}$ = Stickstoff-Konzentration und $C_{Ar}$ = Argon Konzentration sind.

Vor beiden Beschichtungsgängen wurden die Substrate einer kurzen Ionenreinigung in einem Argon-Plasma durchgezogen.

Der Abstand zwischen dem Substrat und Target betrug 150 mm. Das metallische Target war viereckig und seine Größe betrug 200mmX100mm.

Dotierungsgrad:

Der Al-Gehalt erhöhte sich mit der Erhöhung der DC-Leistung am Al-Target, wobei der Stickstoff-Gehalt schon bei 20 Vol. % $N_2$ in Argon 30 Gew. % in der DLC-Schicht erreichte. Weitere Erhöhung der $N_2$-Konzentration in Argon bis 100 Vol% $N_2$ in Argon resultierte in einer nur geringfügigen Erhöhung des Stickstoffgehalts (3-5 Gew.%).

Schichtdicke:

Die Schichtdicke war abhängig von der Beschichtungszeit; es war daher besser dies als Beschichtungsrate auszudrucken.

Eine Erhöhung (bzw. Änderung) der DC-Leistung auf das Al-Target beeinflusste die Schichtdicke kaum. Die Erhöhung der DC-Leistung von 30 W bis 90 W ergab eine Schichtdicke zwischen 1,3 bis 1,8 $\mu$m bzw. eine Beschichtungsrate von 0.45-0.48 $\mu$m/min. Höhere DC-Leistungen, beispielsweise 500 W bis 1000 W konnten zu einer deutlichen Erhöhung der Beschichtungsrate führen. Erhöhung der $N_2$-Konzentration in Argon von 30% zu 50% $N_2$ in Argon erhöhte die Beschichtungsrate von 0,4 auf 0,7 $\mu$m/min.

**Patentansprüche**

1. Sensorschicht für einen Kraftsensor mit Diamant-ähnlichem Kohlenstoff (DLC) welche mit wenigstens einer Metall-Stickstoff-Verbindung dotiert ist.

2. Sensorschicht nach Anspruch 1, **dadurch gekennzeichnet, dass** es die Metall-Stickstoff-Verbindung Metall-Nitride und/oder MetallOxinitride umfasst.

3. Sensorschicht nach Anspruch 1 oder 2, **dadurch gekennzeichnet, dass** die Metall-Stickstoff-Verbindung einen Überschuss an Stickstoff aufweist.

4. Sensorschicht nach einem der Ansprüche 1 bis 3, **dadurch gekennzeichnet, dass** das Metall ausgewählt ist aus Al, Ga, Ti, Ta, Zr, In B und Zn, insbesondere Al, Ga und Ta.

5. Sensorschicht nach einem der Ansprüche 1 bis 4, **dadurch gekennzeichnet, dass** die Metall-Stickstoff-Verbindung in Form von Partikeln mit einer Größe kleiner als 100 nm vorliegt.

6. Sensorschicht nach einem der Ansprüche 1 bis 5, **dadurch gekennzeichnet, dass** die Menge an Metall-Stickstoff-Verbindung des Diamant-ähnlichen Kohlenstoffs von 5 bis 50 Gew.% beträgt.

7. Sensorschicht nach einem der Ansprüche 1 bis 6, **dadurch gekennzeichnet, dass** die Schichtdicke 300 nm bis 3 $\mu$m beträgt.

8. Verfahren zur Herstellung einer Sensorschicht nach einem der Ansprüche 1 bis 7, **dadurch gekennzeichnet, dass** man die Metall-Stickstoff-Verbindung zusammen mit dem Diamant-ähnlichen Kohlenstoff mittels DC-Reaktivsputtern, Plasma unterstütztem CVD, RF pulsierte Gasfluss-Sputtern oder Magnetron-Sputtern aufbringt.

9. Verfahren zur Herstellung einer Sensorschicht nach Anspruch 8, **dadurch gekennzeichnet, dass** die Beschichtungsrate von 0,4 bis 2 $\mu$m/min beträgt.

10. Kraftsensor mit einer Sensorschicht nach einem der Ansprüche 1 bis 7.

11. Verfahren zur Herstellung eines Kraftsensors nach Anspruch 10, **dadurch gekennzeichnet, dass** man die Sensorschicht nach einem der Ansprüche 1 bis 7 über eine Isolierschicht, insbesondere $Al_2O_3$ und eine Haftvermittlerschicht, insbesondere aus TiC, mit dem zu überwachenden Bauteil koppelt.

12. Verwendung eines Kraftsensors gemäß Anspruch 10 zur Zustands- und Funktionsüberwachung von Getrieben, Windturbinen, Hubschraubern, Flugsystemen, rotierenden Bauteilen, Druckmaschinen, in der Werkzeugfertigung und zur wartungsfreien Überwachung von Schiffsmotoren.

**Fig.1**

**Fig.2**

A

Fig.3

B

**Fig.4**

C

**Fig.5**

| 1 µm | 3.00 kV | Signal A = SE2 | 94_02.tif | |
| Vergrößerung = 20.00 K X | | Arbeitsabstand = 6.0 mm | 0.0 ° | DLR |

**Fig.6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19954164 A1, Peiner, E.
- US 77073390 B2

**In der Beschreibung aufgeführte Nicht-Patentliteratur**

- **PEINER, E. et al.** *J. Micromech. Microeng.,* 2007, vol. 17, 83-90
- **LUO, J.K. et al.** *J. Micromech. Microeng.,* 2007, vol. 17, 147-163
- **TIBREWELA, A. et al.** *J. Micromech. Microeng.,* 2006, vol. 16, 75-81
- **KOPPERT, R. ; GOETTEL D. ; FREITAG-WEBER, O. ; SCHULTES, G.** *Solid State Sciences,* 2009, vol. 11, 1797-1800
- **TAKENO, T. et al.** *Int. J. Appl. Electromagnetics and Mechanics,* 2008, vol. 28, 211-217
- **PETERSEN, M. ; HECKMANN, U. ; BANDORF, R. ; GWOZDZ, V. ; SCHNAUBEL, S ; BRÄUER, G. ; KLAGES, C.-P.** *Diamond & Related Materials,* 2011, vol. 20, 814-818
- **GUDAITIS, R. ; MESKINIS, S. ; SLAPIKAS, K. ; ANDRULEVICIUS, M. ; NIAURA, G. ; TAMULEVICIUS, S.** *Surface & Coatings Technology,* 2011, http://dx.doi.org/10.1016/j.surfcoat.2011.08.040
- **HECKMANN, U. ; BANDORF, R. ; GERDES, H. ; LÜBKE, M. ; SCHNAUBEL, S ; BRÄUER, G.** *Procedia Chemistry,* 2009, vol. 1, 64-67
- **TAKENO, T. ; MIKI HIROYUKI ; TAKAGI ,T.** *Int. J. Appl. Electromagnetics and Mechanics,* 2008, vol. 28, 211-217